# EUROPÄISCHE PATENTANMELDUNG

(11) **EP 3 922 879 A1**
(43) Veröffentlichungstag der Anmeldung: **15.12.2021**
(21) Anmeldenummer: 20178810.6
(22) Anmeldetag: 08.06.2020
(51) Int. Cl.: F16F 7/10, E04B 1/98, E04H 9/02

(54) **TILGERANORDNUNG**

(71) Anmelder: Wölfel Engineering GmbH + Co. KG, 97204 Höchberg (DE)
(72) Erfinder: Engelhardt, Jürgen, 97204 Höchberg (DE); Katz, Sebastian, 97204 Höchberg (DE)
(74) Vertreter: Keil & Schaafhausen Patentanwälte PartGmbB

(57) **Zusammenfassung**

Es wird eine Tilgeranordnung (1) mit einer Doppelpendelanordnung angegeben, die eine erste Tilgermasse (2), die an einer in Schwerkraftrichtung höher angeordneten Position (7, 8) aufgehängt ist, und eine zweite Tilgermasse (3), die an einer in Schwerkraftrichtung tiefer angeordneten Position (12, 13) abgestützt ist und durch eine Kopplungsanordnung (4) mit der ersten Tilgermasse (2) verbunden ist, aufweist, und mit einer Dämpferanordnung, die mit mindestens einer der beiden Tilgermassen (2, 3) zusammenwirkt.

Eine derartige Tilgeranordnung soll auf einfache Weise mit geringem Bauraum ausgebildet sein können.

Hierzu ist vorgesehen, dass die Dämpferanordnung mindesten einen durch eine Halteanordnung (20, 26) quer zur Schwerkraftrichtung gehaltenes Reibelement (17, 23) aufweist, das an mindestens einer der Tilgermassen (2, 3) anliegt.

## Beschreibung

Die vorliegende Erfindung betrifft eine Tilgeranordnung mit einer Doppelpendelanordnung, die eine erste Tilgermasse, die an einer in Schwerkraftrichtung höher angeordneten Position aufgehängt ist, und eine zweite Tilgermasse, die an einer in Schwerkraftrichtung tiefer angeordneten Position abgestützt ist und durch eine Kopplungsanordnung mit der ersten Tilgermasse verbunden ist, aufweist, und mit einer Dämpferanordnung, die mit mindestens einer der beiden Tilgermassen zusammenwirkt.

Eine derartige Tilgeranordnung ist beispielsweise aus WO 2004/003306 A1 bekannt.

Eine derartige Tilgeranordnung ist insbesondere für hohe und schlanke Bauwerke vorgesehen, insbesondere für Türme von Windkraftanlagen. Unter einem "hohen, schlanken Bauwerk" wird im Folgenden ein Bauwerk verstanden, bei dem das Verhältnis von Höhe zu größtem Durchmesser mindestens 10 beträgt.

Die Erfindung wird im Folgenden anhand eines Turmes einer Windkraftanlage beschrieben. Sie ist aber auch bei anderen hohen, schlanken Bauwerken anwendbar, beispielsweise Fabrikschornsteinen.

Der Wind, der bei einer Windkraftanlage den Rotor rotatorisch antreiben soll, übt auch im Übrigen eine Kraft auf den Turm der Windkraftanlage aus. Der Turm bildet sozusagen einen einseitig eingespannten Stab, der bei der durch den Wind hervorgerufenen Belastung zu einer Schwingung neigt. Diese Schwingung soll durch die Tilgeranordnung möglichst wirksam gedämpft werden.

Bei den niedrigen Frequenzen, mit denen der Turm schwingt, benötigt die Tilgeranordnung allerdings einen erheblichen Bauraum.

Der Erfindung liegt die Aufgabe zugrunde, auf einfache Weise eine Tilgeranordnung mit geringem Raumbedarf bereitzustellen.

Diese Aufgabe wird durch eine Tilgeranordnung der eingangs genannten Art dadurch gelöst, dass die Dämpfungsanordnung mindestens ein durch eine Halteeinrichtung quer zur Schwerkraftrichtung gehaltenes Reibelement aufweist, das an mindestens einer der Tilgermassen anliegt.

Mit einer derartigen Anordnung kann man den für die Tilgeranordnung benötigten Bauraum klein halten und gleichzeitig eine zufriedenstellende Dämpfung der Schwingung der tragenden Struktur, also beispielsweise des Turms der Windkraftanlage, erreichen. Durch die Verwendung der Doppelpendelanordnung lässt sich bei gleicher Tilgereigenfrequenz der benötigte Bauraum erheblich verkleinern. Verglichen mit der Länge eines Pendels einer Einfachpendelanordnung benötigt die Doppelpendelanordnung eine wesentlich geringere Höhe. Die Kopplungsanordnung sorgt dafür, dass die beiden Tilgermassen gleichartig schwingen. Die Kopplung ist allerdings vorzugsweise nicht starr, sondern erlaubt einen veränderlichen Abstand zwischen den beiden Tilgermassen. Dieser Abstand ist im Nulldurchgang der Pendelbewegung der Tilgermassen am geringsten. Das Reibelement wirkt mit mindestens einer der Tilgermassen zusammen. Bei der Schwingbewegung der Tilgermasse reibt dann die Tilgermasse an dem Reibelement entlang und entzieht der Schwingbewegung Energie und wandelt sie in Wärme um.

Vorzugsweise behält zumindest die Tilgermasse, an der das Reibelement anliegt, während einer Schwingbewegung ihre Orientierung im Raum bei. Eine gedachte Linie an der Tilgermasse, die im Nulldurchgang der Tilgermasse horizontal liegt, bleibt bei der Bewegung der Tilgermasse weiterhin horizontal. Dies lässt sich beispielsweise dadurch realisieren, dass die Tilgermasse an Punkten aufgehängt oder abgestützt ist, die mit anderen Punkten, an denen die Aufhängung oder Abstützung mit der tragenden Struktur verbunden sind, ein Parallelogramm bilden.

Vorzugsweise ermöglicht die Halteanordnung eine Bewegung des Reibelementes senkrecht zu einer Schwingbewegung der Tilgermasse. Das Reibelement ist also nur in Richtung der Schwingbewegung abgestützt. Diese Schwingbewegung erfolgt im Wesentlichen horizontal, weist aber eine kleine Bewegungskomponente in vertikaler Richtung auf. Dieser Bewegungskomponente kann das Reibelement bei der Bewegung der Tilgermasse folgen.

Vorzugsweise wirken beide Tilgermassen mit jeweils einem Reibelement zusammen. Dadurch lässt sich eine relativ gute Dämpfung erzielen.

Bevorzugterweise ist das mindestens eine Reibelement durch eine Federanordnung belastet, die in Richtung auf die mindestens eine Tilgermasse wirkt. Die Federanordnung drückt also das Reibelement gegen die Tilgermasse. Über die Federanordnung lässt sich die Reibkraft zwischen dem Reibelement und der Tilgermasse einstellen.

Vorzugsweise wirkt die Federanordnung in Schwerkraftrichtung, wobei das mindestens eine Reibelement an einer Oberseite oder Unterseite der mindestens einen Tilgermasse anliegt. Diese Ausgestaltung hat den Vorteil, dass das Reibelement praktisch in allen Schwingungsrichtungen der Tilgermasse auf die Tilgermasse wirken kann. Ein weiterer Vorteil liegt darin, dass sich die Reibkraft zwischen dem Reibelement und der Tilgermasse während der Bewegung verändert. Die Reibkraft zwischen der Tilgermasse und dem Reibelement ist im Nulldurchgang der Tilgermasse, also dann, wenn die Tilgermasse bei einer Schwingbewegung ihre größte Geschwindigkeit hat, am geringsten. Sie nimmt zum Ende der Schwingbewegung hin zu, weil die Tilgermasse zum Ende der Schwingbewegung hin die Federanordnung stärker komprimiert. Die Bewegung der Tilgermasse führt vom Nulldurchgang weg zu einer stärkeren Kompression der Feder, was die Reibungskraft hin zu größeren Tilgeramplituden erhöht.

Weiterhin ist von Vorteil, wenn die mindestens eine Federanordnung eine Einstellvorrichtung zum Einstellen ihrer Vorspannung aufweist. Mit der Einstellung der Vorspannung lässt sich die Größe der Dämpfung und Eigenfrequenz verändern und an die vorliegenden Gegebenheiten anpassen. Diese Anpassung kann auch noch vor Ort erfolgen. Es ist nicht immer möglich, die notwenige Dämpfung und die jeweiligen Eigenfrequenzen im Vorhinein genau genug zu berechnen.

Vorzugsweise ist für beide Tilgermassen jeweils ein Reibelement mit jeweils einer Federanordnung vorgesehen, wobei die beiden Federanordnungen unterschiedliche Federsteifigkeiten aufweisen. Damit ist ein relativ weiter Einstellbereich darstellbar.

Vorzugsweise ist eine Federanordnung deaktivierbar. Man kann also dafür sorgen, dass ein Reibbelag an einer Tilgermasse nur leicht, also mit einer vernachlässigbaren Wirkung, oder gar nicht mit der entsprechenden Tilgermasse zusammenwirkt. In diesem Fall erfolgt die Dämpfung nur über die andere Tilgermasse. Bei Bedarf kann aber die zuerst erwähnte Dämpfungseinrichtung aktiviert werden, indem die Federanordnung den entsprechenden Reibbelag wieder gegen die Tilgermasse drückt.

Vorzugsweise ist die Federanordnung mit höherer Federsteifigkeit deaktivierbar. Für kleine Frequenzen reicht die Federanordnung mit niedriger Federsteifigkeit aus. Für höhere Frequenzen sind beide Dämpferbaugruppen aktiv, d.h. beide Federanordnungen pressen jeweils den entsprechenden Reibbelag gegen die entsprechende Tilgermasse.

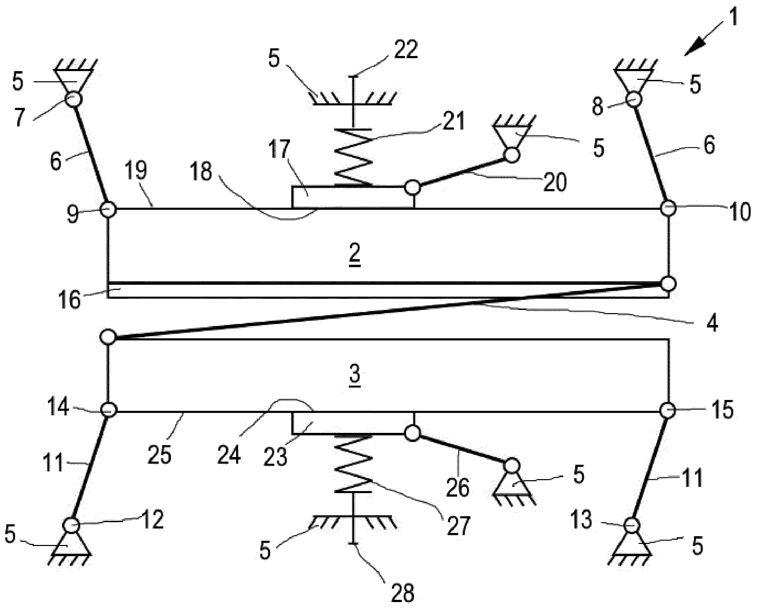

Die Erfindung wird im Folgenden anhand eines bevorzugten Ausführungsbeispiels in Verbindung mit der Zeichnung beschrieben. Hierin zeigt
die einzige Figur eine schematische Darstellung einer Tilgeranordnung.

Eine Tilgeranordnung 1 dient zur Dämpfung von Schwingungen eines hohen, schlanken Bauwerks. Ein hohes, schlankes Bauwerk ist ein Bauwerk, bei dem das Verhältnis von Höhe zu größter Breite mindestens 10 beträgt. Ein typisches Anwendungsbeispiel für eine derartige Tilgeranordnung 1 ist die Verwendung in einem Turm einer Windkraftanlage.

Die Tilgeranordnung 1 ist in der Fig. so dargestellt, dass bei bestimmungsgemäßem Gebrauch die Schwerkraftrichtung von oben nach unten verläuft.

Die Tilgeranordnung 1 weist eine erste Tilgermasse 2 und eine zweite Tilgermasse 3 auf. Die beiden Tilgermassen 2, 3 sind durch eine Kopplungsanordnung 4 miteinander verbunden. Die Kopplungsanordnung 4 ist hier als Gelenkstrebe dargestellt. Die Kopplung zwischen den beiden Tilgermassen 2, 3 kann jedoch auch auf andere Weise erfolgen. Die Kopplungsanordnung 4 sorgt dafür, dass sich die beiden Tilgermassen 2, 3 gleichartig schwingen, also das Ende einer Schwingbewegung gleichzeitig erreichen und auch den Nulldurchgang der Schwingbewegung, bei dem die beiden Tilgermassen 2, 3 ihre größte Geschwindigkeit haben, gleichzeitig durchlaufen.

Die Tilgeranordnung 1 ist in einer tragenden Struktur 5 angeordnet, von der hier nur Lagerstellen dargestellt sind. Die erste Tilgermasse 2 ist an der tragenden Struktur 5 mit Hilfe von zwei Pendelstangen 6 aufgehängt. Hierzu weist die tragende Struktur 5 zwei Lagerstellen 7, 8 auf. Die Pendelstangen 6 sind an der ersten Tilgermasse 2 an Befestigungspunkten 9, 10 befestigt. Die Lagerstellen 7, 8 und die Befestigungspunkte 9, 10 bilden zusammen ein Parallelogramm. Damit behält die erste Tilgermasse 2 ihre horizontale Ausrichtung im Raum, also ihre Ausrichtung quer zur Schwerkraftrichtung, bei, auch wenn die erste Tilgermasse 2 schwingt.

Die zweite Tilgermasse 3 ist über Pendelstangen 11 an Stützpunkten 12, 13 der tragenden Struktur 5 abgestützt. Die Pendelstangen 11 sind über Befestigungspunkte 14, 15 mit der zweiten Tilgermasse 3 verbunden. Auch hier bilden die Stützpunkte 12, 13 und die Befestigungspunkte 14, 15 ein Parallelogramm, so dass auch die zweite Tilgermasse 3 bei einer Schwingbewegung ihre horizontale Ausrichtung, also ihre Ausrichtung quer zur Schwerkraftrichtung beibehält.

An der ersten Tilgermasse 2 ist eine Zusatzmasse 16 befestigt. Die Zusatzmasse 16 kann ergänzt werden, falls erforderlich. Die Zusatzmasse 16 kann auch an der zweiten Tilgermasse 3 vorgesehen sein. Es können auch an beiden Tilgermassen 2, 3 Zusatzmassen 16 befestigt werden.

Die erste Tilgermasse 2 wirkt mit einem ersten Reibelement 17 zusammen. Das erste Reibelement 17 weist einen Reibbelag 18 auf, der an der ersten Tilgermasse 2, genauer gesagt an der Oberseite 19 der ersten Tilgermasse 2 anliegt.

Das Reibelement 17 ist über eine Halteanordnung 20, beispielsweise eine Gelenkstrebe, an der tragenden Struktur 5 befestigt. Die Halteanordnung 20 ist hierbei so ausgelegt, dass sie eine Bewegung des Reibelements 17 in Schwerkraftrichtung ermöglicht. Eine Bewegung des Reibelements 17 quer zur Schwerkraftrichtung wird aber verhindert.

Eine erste Federanordnung 21 wirkt auf das erste Reibelement 17 und drückt das erste Reibelement 17 an die erste Tilgermasse 2. Die erste Federanordnung 21 ist an der tragenden Struktur 5, die ein Widerlager bildet, abgestützt und weist eine Einstelleinrichtung 22 auf, mit der die Kraft, mit der die erste Federanordnung 21 auf das erste Reibelement 17 wirkt und es gegen die erste Tilgermasse 2 drückt, einstellbar ist.

Ein zweites Reibelement 23 wirkt mit der zweiten Tilgermasse 3 zusammen. Das zweite Reibelement 23 weist einen Reibbelag 24 auf, der mit der Unterseite 25 der zweiten Tilgermasse 3 zusammenwirkt.

Das zweite Reibelement 23 ist über eine Halteanordnung 26 mit der tragenden Struktur 5 verbunden. Auch hier kann die Halteanordnung beispielsweise durch eine Gelenkstrebe gebildet sein. Die Halteanordnung 26 erlaubt wiederum eine Bewegung des zweiten Reibelements 23 in Schwerkraftrichtung, verhindert aber eine Bewegung des zweiten Reibelements 23 senkrecht zur Schwerkraftrichtung.

Das zweite Reibelement 23 ist durch eine zweite Federanordnung 27 belastet, die an der tragenden Struktur 5 abgestützt ist. Die zweite Federanordnung 27 drückt das zweite Reibelement 23 gegen die zweite Tilgermasse 3. Die zweite Federanordnung 27 weist eine Einstellvorrichtung 28 auf, mit der die Kraft, mit der die zweite Federanordnung 27 das zweite Reibelement 23 gegen die zweite Tilgermasse 3 drückt, einstellbar ist.

Die beiden Federanordnungen 21, 27 weisen unterschiedliche Federsteifigkeiten auf. Insbesondere kann man vorsehen, dass eine der beiden Federanordnung 21, 27 eine höhere Federsteifigkeit als die andere Federanordnung 21, 27 aufweist. Eine der Einstellvorrichtungen 22, 28 der Federanordnung 21 kann so ausgebildet sein, dass die entsprechende Federanordnung 21, 27 vollständig deaktiviert wird, so dass das entsprechende Reibelement 17, 23 nicht mehr oder nicht mehr in nennenswerter Weise mit der jeweiligen Tilgermasse 2, 3 zusammenwirkt. Dies gilt insbesondere für die Federanordnung mit der höheren Federsteifigkeit.

Wenn das Bauwerk, dessen Schwingungen zu dämpfen sind, beispielsweise der Turm der besprochenen Windkraftanlage, anfängt zu schwingen, dann wird eine derartige Schwingbewegung über die tragende Struktur 5 an die beiden Tilgermassen 2, 3 übertragen. Die beiden Tilgermassen 2, 3 schwingen dann ebenfalls, allerdings mit einer Phasenverschiebung, so dass die Schwingbewegung des Turms der Windkraftanlage (oder eines anderen Bauwerks) gedämpft wird.

Wie erwähnt, behalten die beiden Tilgermassen 2, 3 bei einer derartigen Schwingbewegung ihre horizontale Ausrichtung bei. Die Oberseite 19 der ersten Tilgermasse 2 und die Unterseite 25 der zweiten Tilgermasse 3 sind beide eben ausgebildet, wobei sie in einer horizontalen Ebene liegen, d.h. senkrecht zur Schwerkraftrichtung. Der Reibbelag 18, 24 der Reibelemente 17, 23 ist ebenfalls eben, so dass sich eine flächige Berührung zwischen dem ersten Reibelement 17 und der ersten Tilgermasse 2 bzw. dem zweiten Reibelement 23 und der zweiten Tilgermasse 3 ergibt.

Bei einer Schwingbewegung der beiden Tilgermassen 2, 3 bewegen sich die Befestigungspunkte 9, 10 bzw. die Befestigungspunkte 14, 15 jeweils auf einer Kreisbahn, wobei die Kreisbahnen für die erste Tilgermasse 2 ihren Mittelpunkt in Schwerkraftrichtung oberhalb der ersten Tilgermasse 2 und für die zweite Tilgermasse 3 in Schwerkraftrichtung unterhalb der zweiten Tilgermasse 3 haben. Das bedeutet, dass die erste Tilgermasse 2 in ihrer Neutralstellung, die auch als "Nulldurchgang" bezeichnet wird, mit der geringsten Reibungskraft belastet wird. Hier hat dann nämlich die erste Federanordnung 21 ihre größte Ausdehnung und dementsprechend ihre geringste Anpresskraft. Die Anpresskraft nimmt allerdings zum Ende der Schwingbewegung oder Pendelbewegung zu, weil die erste Tilgermasse 2 zum Ende der Pendelbewegung hin in Schwerkraftrichtung ansteigt und die erste Federanordnung 21 stärker komprimiert. Dementsprechend wird die erste Tilgermasse 2 zum Ende der Schwingbewegung hin zunehmend gebremst, was eine gute Dämpfung ergibt.

Gleiches gilt für die zweite Tilgermasse 3. Auch diese hat in ihrer Neutralstellung die geringste Reibkraft gegenüber dem zweiten Reibelement 23 zu überwinden, weil die zweite Federanordnung 27 hier ihre größte Ausdehnung und damit ihre geringste Federkraft hat. Die Federkraft steigt dann zum Ende der Pendelbewegung oder Schwingbewegung hin an, so dass auch die Bewegung der zweiten Tilgermasse 3 zum Ende der Schwingbewegung hin am stärksten gedämpft wird.

Mit anderen Worten führt die vertikale Bewegung der Tilgermassen 2, 3, also die Bewegung der Tilgermassen in Schwerkraftrichtung, zu einer zunehmenden Kompression der Federanordnungen 21, 27, was die Reibungskraft hin zu größeren Tilgeramplituden, d.h. Amplituden der Pendel- oder Schwingbewegung der Tilgermassen 2, 3, erhöht.

Wie erwähnt, kann die Vorspannung der Federanordnungen 21, 27 durch die Einstelleinrichtungen 22, 28 angepasst werden.

Eine weitere Anpassung kann durch die oben erwähnten Zusatzmasse(n) 16 erfolgen.

## Patentansprüche

1. Tilgeranordnung (1) mit einer Doppelpendelanordnung, die eine erste Tilgermasse (2), die an einer in Schwerkraftrichtung höher angeordneten Position (7, 8) aufgehängt ist, und eine zweite Tilgermasse (3), die an einer in Schwerkraftrichtung tiefer angeordneten Position (12, 13) abgestützt ist und durch eine Kopplungsanordnung (4) mit der ersten Tilgermasse (2) verbunden ist, aufweist, und mit einer Dämpferanordnung, die mit mindestens einer der beiden Tilgermassen (2, 3) zusammen wirkt, **dadurch gekennzeichnet, dass** die Dämpferanordnung mindestens ein durch eine Halteanordnung (20, 26) quer zur Schwerkraftrichtung gehaltenes Reibelement (17, 23) aufweist, das an mindestens einer der Tilgermassen (2, 3) anliegt.

2. Tilgeranordnung nach Anspruch 1, **dadurch gekennzeichnet, dass** zumindest die Tilgermasse (2, 3), an der das Reibelement (17, 23) anliegt, während einer Schwingbewegung ihre Orientierung im Raum beibehält.

3. Tilgeranordnung nach Anspruch 1 oder 2, **dadurch gekennzeichnet, dass** die Halteanordnung (20, 26) eine Bewegung des Reibelements (17, 23) senkrecht zu einer Schwingbewegung der Tilgermasse (2, 3) ermöglicht.

4. Tilgeranordnung nach einem der Ansprüche 1 bei 3, **dadurch gekennzeichnet, dass** beide Tilgermassen (2, 3) mit jeweils einem Reibelement (17, 23) zusammenwirken.

5. Tilgeranordnung nach einem der Ansprüche 1 bis 4, **dadurch gekennzeichnet, dass** das mindestens eine Reibelement (17, 23) durch eine Federanordnung (21, 27) belastet ist, die in Richtung auf die mindestens eine Tilgermasse (2, 3) wirkt.

6. Tilgeranordnung nach Anspruch 5, **dadurch gekennzeichnet, dass** die Federanordnung (21, 27) in Schwerkraftrichtung wirkt, wobei das mindestens eine Reibelement (17, 23) an einer Oberseite (19) oder Unterseite (25) der mindestens einen Tilgermasse (2, 3) anliegt.

7. Tilgeranordnung nach Anspruch 5 oder 6, **dadurch gekennzeichnet, dass** die mindestens eine Federanordnung (21, 27) eine Einstellvorrichtung (22, 28) zum Einstellen ihrer Vorspannung aufweist.

8. Tilgeranordnung nach einem der Ansprüche 5 bis 7, **dadurch gekennzeichnet, dass** für beide Tilgermassen (2, 3) jeweils ein Reibelement (17, 23) mit jeweils einer Federanordnung (21, 27) vorgesehen ist, wobei die beiden Federanordnungen (21, 27) unterschiedliche Federsteifigkeiten aufweisen.

9. Tilgeranordnung nach Anspruch 8, **dadurch gekennzeichnet, dass** eine Federanordnung (21, 27) deaktivierbar ist.

10. Tilgeranordnung nach Anspruch 9, **dadurch gekennzeichnet, dass** die Federanordnung (21, 27) mit höherer Federsteifigkeit deaktivierbar ist.
